**Europäisches Patentamt**

**European Patent Office**

**Office européen des brevets**

(11) Veröffentlichungsnummer: **0 049 216**
**B1**

(12) **EUROPÄISCHE PATENTSCHRIFT**

(45) Veröffentlichungstag der Patentschrift:
06.02.85

(51) Int. Cl.⁴: **G 06 F 5/00**

(21) Anmeldenummer: **81730102.1**

(22) Anmeldetag: **30.09.81**

(54) **Rechenwerkeinheit mit einer parallelen bidirektionalen Schiebeeinrichtung.**

(30) Priorität: **30.09.80 DE 3037359**

(43) Veröffentlichungstag der Anmeldung:
**07.04.82 Patentblatt 82/14**

(45) Bekanntmachung des Hinweises auf die Patenterteilung:
**06.02.85 Patentblatt 85/6**

(84) Benannte Vertragsstaaten:
**DE FR GB IT NL**

(56) Entgegenhaltungen:
US - A - 3 768 077
US - A - 3 887 799
US - A - 4 122 534

**ELECTRONICS LETTERS, Band 5, Heft 25, 11. Dezember 1969, LONDON (GB) L. FRECON: "Aiguillage et convertisseur virgule-flottante/virgule-fixe cellulaires", Seiten 651-652**
**REGELUNGSTECHNIK, Heft 2, 10. Jahrgang 1962, MÜNCHEN (DE) W. HILBERG: "Die Bildung des logarithmischen Analogwertes einer ziffern- und stellenmässig vorgegebenen grossen Zahl", Seiten 65-70**
**PROCEEDINGS OF THE IEEE INTERNATIONAL CONFERENCE ON CIRCUITS AND COMPUTERS, ICCC 80, Oktober 1-3, 1980, PORT CHESTER, N.Y. (US) R.**

(73) Patentinhaber: **Heinrich-Hertz-Institut für Nachrichtentechnik Berlin GmbH, Einsteinufer 37, D-1000 Berlin 10 (DE)**

(72) Erfinder: **Talmi, Maati, Rödernallee 166, D-1000 Berlin 51 (DE)**

(74) Vertreter: **Wolff, Konrad, Einsteinufer 37, D-1000 Berlin 10 (DE)**

(56) Entgegenhaltungen: (Fortsetzung)
**BLOCK et al.: "Architecture for VLSI-circuits in digital signal processing", Seiten 1184-1187**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Rechenwerkeinheit der im Oberbegriff des Patentanspruches 1 genannten Art.

In elektronischen Rechenanlagen können aufgrund der technologischen Möglichkeiten häufig benötigte arithmetische Operationen mit speziellen, entsprechend aufgebauten Schaltungen ausgeführt werden. Zu den häufig benötigten arithmetischen Operationen gehört auch das Schieben von Binärzahlen, insbesondere bei Gleitkomma-Operationen.

Der Stand der Technik, von dem bei der Erfindung ausgegangen wird, ist aus der US-A-4 122 534 bekannt. Dort wird nämlich die Idee realisiert, ein binäres Zahlwort wahlweise nach links oder nach rechts unter Verwendung einer nur unidirektionalen Schiebeeinrichtung zu verschieben, indem ausser der gewünschten Schiebeoperation noch zwei Spiegelungsoperationen durchzuführen sind. Das heisst, das unidirektionale Schiebewerk ist hierzu in jedem Falle zweimal zu durchlaufen, z.B. für ein Schieben nach links zunächst mit einer Verschiebung um die gewünschte Anzahl von Positionen und der ersten Spiegelung und sodann ohne jede Verschiebung und mit der zweiten Spiegelung. Dementsprechend erfolgt ein Schieben nach rechts zunächst ohne jede Verschiebung und mit der ersten Spiegelung und sodann mit der Verschiebung des gespiegelten Zahlwortes um die gewünschte Anzahl von Positionen und der zweiten, der Rück-Spiegelung. Für die Durchführung der Schiebeoperation dient dort ein aus Schieberegistern in Stufen aufgebautes Schiebewerk, das von seinem Ausgang die n-stellige Binärzahl immer gespiegelt an ein Register übergibt. Es ist offensichtlich, dass gemäss diesem bekannten Stand der Technik der Aufwand für die Rechenzeit recht hoch ist.

Aus der US-A-3 887 799 ist eine bidirektionale Schiebeeinrichtung bekannt, mit der n-stellige Binärzahlen bei geringem Aufwand für Rechenzeit sowohl nach links als auch nach rechts verschoben werden können. Dazu wird ein Schiebewerkfeld benötigt, das aus zwei Halbmatrix-Strukturen mit Tristate-Elementen in gestaffelter Anordnung zu realisieren ist. Für ein Links-Schieben sind dort dann die zu verschiebende Binärzahl, ein Übertrag und das entsprechende Steuersignal dem Schiebewerkfeld in einer bestimmten Weise zuzuführen. Für ein Rechts-Verschieben ist demgegenüber eine Vertauschung der Eingänge für die zu verschiebende Binärzahl und den Übertrag und eine Umkehrung der Steuersignaleingänge in ihrer Reihenfolge vorzunehmen. Die um die gewünschte Anzahl von Positionen und in der gewünschten Richtung verschobene Binärzahl erscheint dann direkt am Ausgang des Schiebewerkfeldes. Als Eingabeeinrichtungen sind für die Signale, die die Binärzahl und den Übertrag darstellen, sowie für die Steuersignale je ein Multiplexer erforderlich. Hinweise darauf, in welcher Weise hier Modifizierungen möglich wären, um z.B. anstelle des bidirektionalen Schiebewerks ein unidirektionales verwenden zu können und auf damit zusammenhängende Konsequenzen bezüglich der Ein-/Ausgabe- und Steuereinrichtungen, sind diesem Stand der Technik aus sich heraus nicht zu entnehmen.

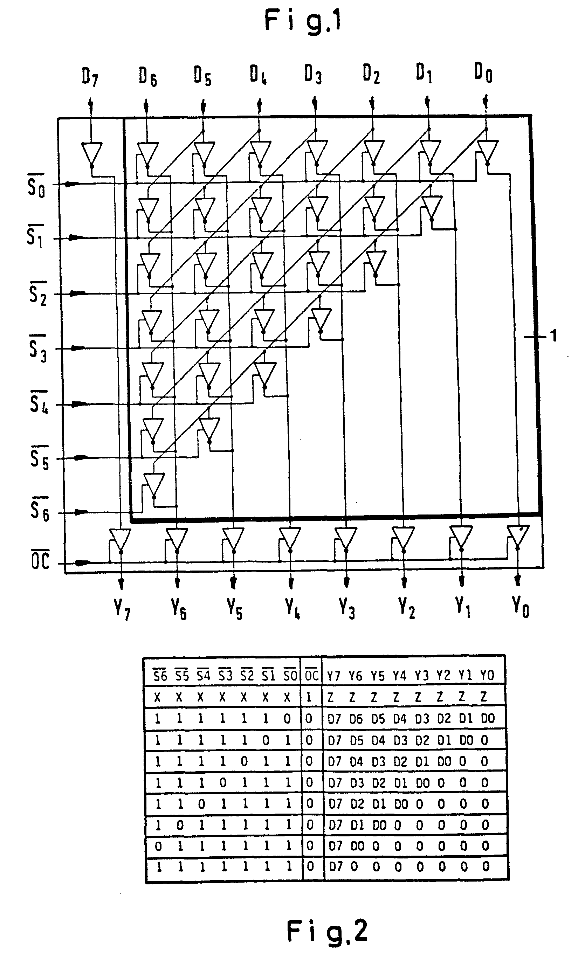

Unter diesem Gesichtspunkt bedarf das nur unidirektionale, als Halbmatrix-Struktur realisierte Schiebewerkfeld gemäss «Electronics Letters» Bd, 5, Heft 25, 11. Dez. 1969, Seiten 651–652, insbesondere dort Fig. 1 B, einer genaueren Untersuchung. Dabei handelt es sich um eine Halbmatrix mit nur einem Eingang für ein zu verarbeitendes Signal, das durch eines von n Steuersignalen auf einen von $n+1$ Ausgängen durchschaltbar ist. Für Signale mit mehreren Stellen, z.B. Binärzahlen einschliesslich eines Vorzeichens, ergibt sich eine aus einem Rechteck und einem Dreieck zusammengesetzte Konfiguration (vgl. a.a.O. Fig. 2 A), deren Grösse bzw. verhältnismässig grosse Anzahl dort vorzusehender Schaltzellen von der Anzahl der Stellen der Binärzahl sowie der Anzahl von Positionen, um die diese maximal zu verschieben ist, abhängt und mit den a.a.O. genannten Formeln berechnet werden kann. Für Gleitkomma-/Festkomma-Umwandlungen wird dort auch noch eine Schaltung vorgeschlagen (vgl. a.a.O. Fig. 2 B). Alle diese Schaltungen sollen mit einer Art von Schaltzellen realisiert werden (vgl. a.a.O. Fig. 1 A), mit denen sich Leitungskreuzungen vermeiden lassen. Dies bedingt andererseits, dass die Signalausgänge einer solchen Schaltzelle jeweils direkt an die Signaleingänge einer nachfolgenden Schaltzelle anzuschliessen sind, also nur Reihenschaltungen realisiert werden können. Damit erscheinen die hieraus bekannten Massnahmen für eine Anwendung im vorliegenden Fall als nicht geeignet.

Die Erfindung geht davon aus, dass für elektronische Rechenanlagen ein Einsatz von speziellen Schaltungsanordnungen nur dann interessant ist, wenn die dort stattfindenden Operationen mit hoher Geschwindigkeit durchgeführt werden können und der Leistungsbedarf gering ist. Die Aufgabe besteht darin, für ein bidirektionales Verschieben von n-stelligen Binärzahlen eine Rechenwerkeinheit zu schaffen, in der sowohl die Anzahl und Art der benötigten Schaltelemente als auch der Durchläufe oder Stufen, in denen eine durchzuführende Operation erfolgt, also die Rechenzeit, möglichst gering sind.

Gemäss der Erfindung wird diese Aufgabe gelöst durch die im kennzeichnenden Teil des Patentanspruches 1 angegebenen Merkmale.

Diese Merkmale sind, soweit überhaupt, beim berücksichtigten Stand der Technik nur in Ansätzen verwirklicht. Sofern dort ähnliche oder vergleichbare weitere Teilaufgaben zu lösen sind, werden jeweils unterschiedliche Massnahmen dafür vorgesehen. Beispielsweise ist im Vergleich zur erfindungsgemässen Lösung der schaltungstechnische Aufwand allein für das Schiebewerkfeld gemäss US-A-3 887 799 doppelt so gross und ausserdem eine komplexe Schaltung mit mehreren Multiplexern für die Zuführung der verschiedenen Signale, auch der Steuersignale, zum Schiebewerkfeld erforderlich. Insbesondere findet sich dort kein Hinweis auf die Möglichkeit der Spiegelung von Binärzahlen und die Verwendung nur eines unidirektionalen Schiebewerks, um bidirektional damit arbeiten zu können.

Demgegenüber ist zwar die Idee der Spiegelung beim Stand der Technik gemäss US-A-4 122 534, jedoch mit anderen Mitteln verwirklicht, wie weiter oben bereits ausgeführt ist. Hinzu kommt, dass dort die Rechenzeit infolge der vielen einzelnen Stufen für eine vollständige Operation sehr viel grösser ist als bei Ausführungsformen der Erfindung.

Als wesentlicher Vorteil der Erfindung gegenüber dem relevanten Stand der Technik ergibt sich damit, dass an sich widersprüchliche Forderungen, nämlich Verringerung sowohl der Art als auch der Anzahl von Schaltelementen als auch von Rechenzeit, erfüllt werden und die Schiebeeinrichtung gute Voraussetzungen für eine Integration aufweist. Ein derartig aufgebauter Modul für Rechenanlagen führt Verschiebungen, unabhängig von der Anzahl der Stellen, immer mit derselben, hohen Geschwindigkeit durch. Er enthält im wesentlichen – nämlich im Schiebewerkfeld und für die Ein- und Ausgabeeinheiten – nur eine Art von Schaltelementen, die Tristate-Elemente.

Zur genaueren Erläuterung des Aufbaus und der Funktion wird zunächst auf das Schiebewerkfeld näher eingegangen, dessen Aufgabe z.B. darin besteht, eine binäre Zahl mit n Stellen so darzustellen, dass das höchstwertigste Bit (MSB – erste Eins der Ziffernfolge) links- bzw. rechtsbündig erscheint. Für die n Stellen der Ziffernfolge gibt es n Möglichkeiten für das MSB. Diese n Möglichkeiten werden, unabhängig von der tatsächlichen Position des MSB, in jeweils von Zeile zu Zeile um eine Stelle verschobenen Spalten des Feldes berücksichtigt. Dies ergibt eine dreieckförmige Matrix, da die beim Verschieben der Zeilen am Ende des niedrigsten Bit (LSB – letzte Eins der Ziffernfolge freiwerdenen Positionen nicht besetzt und die am Ende des MSB nicht benötigten Positionen nicht ersetzt werden müssen. Am Ausgang erscheint die Binärzahl dann in der gewünschten verschobenen Darstellung, wenn die der tatsächlichen Position des MSB betreffende Zeile des Feldes gelesen wird und dabei die am LSB-Ende nachzuziehenden Zeichen als Folge gleicher Ziffern (Nullen/Einsen) erscheinen. Das bedeutet, die Signal-Eingänge des Feldes führen für das MSB an der ersten Stelle nur an ein Tristate-Element, das sich in der ersten Zeile und der ersten Spalte befindet; für das MSB an der zweiten Stelle an zwei Tristate-Elemente, die sich in der ersten Zeile/zweiten Spalte sowie in der zweiten Zeile/ersten Spalte befinden usw. bis für das MSB an der letzten Stelle (n-te Position) an n Tristate-Elemente in der ersten Zeile/n-ten Spalte, zweiten Zeile/(n-1)-ten Spalte usw. bis n-te Zeile/erste Spalte. Die Signalausgänge der Tristate-Elemente jeder Spalte sind zusammengefasst, ebenso die Steuersignaleingänge aller Tristate-Elemente einer jeweiligen Zeile. Der prinzipielle Aufbau einer solchen Matrix bleibt in seiner Funktion gleichbedeutend, wenn bezüglich der Signaleingänge, Signalausgänge und Steuersignaleingänge die Richtungen der kettenförmigen Zusammenschaltungen vertauscht werden.

Selbstverständlich besteht mit einem solchen Schiebewerkfeld auch die Möglichkeit, eine eingegebene Binärzahl auch unabhängig von der Position des MSB um eine gewünschte Anzahl von Stellen zu verschieben. Die Verschiebung einer binären Zahl entspricht, je nach Richtung der Verschiebung, einer Multiplikation bzw. einer Division mit Zweierpotenzzahlen. Daraus ist leicht zu erkennen, dass ein solches Schiebewerkfeld nicht nur für Gleitkomma-Operationen vorteilhaft ist.

Da das für die Erfindung wesentliche Schiebewerkfeld keine Schaltelemente für die entfallenden Stellen aufweist, am Ausgang aber Nullen erscheinen müssen, ist dafür zu sorgen, dass der dritte, hochohmige Zustand der Tristate-Elemente derartige Nullen ergibt. Hierfür dient die aus Tristate-Elementen aufgebaute Ausgabeeinheit mit einem Steuersignal $\overline{OC}$ zur Übernahme der Binärzahl. Eine entsprechend ausgebildete Ausgabeeinrichtung dient auch zur Entkopplung.

Von ebenfalls wesentlicher Bedeutung für die Erfindung ist die Steuereinrichtung, mit der festgestellt und durch logische Entscheidungen festgelegt wird, bei welchem Zahlenwert der am Eingang des Feldes anstehenden Binärzahl welche Zeile des Feldes zu lesen ist. Hierzu soll zunächst kurz auf die Grundlagen von Gleitkomma- und Festkomma-Rechnungen eingegangen werden.

In der Festkomma-Darstellung wird eine Zahl durch ein einziges Zahlwort angegeben, in dem jede Stelle sowohl von ihrer Position her als auch durch ihren Wert ihren Beitrag liefert. Befindet sich der Basispunkt z.B. an dem Ende des LSB, d.h. des Zahlzeichens mit der geringsten Werigkeit, sind die Wertigkeiten aller Positionen grösser oder gleich Eins, und das Zahlwort stellt eine ganze Zahl dar. Befindet sich der Basispunkt hingegen am Ende des MSB, d.h. des Zahlzeichens mit der höchsten Wertigkeit, wird mit dem Zahlwort eine Zahl dargestellt, die kleiner als Eins, also ein echter Bruch ist. Bei der Gleitkomma-Darstellung wird für die Zahlendarstellung ein Datenwort verwendet, das zwei Zahlworte enthält, nämlich für die darzustellende Zahl x deren Mantisse M und deren Exponent E nach der Formel:

$$X = \pm M \cdot b^{\pm E},$$

wobei die Zahl b, die Gleitkomma-Basis, eine positive ganze Zahl ist und nicht explizit dargestellt werden muss, wenn – wie üblich – ihr Wert durch die getroffene Konvention immer derselbe ist. Die Zahl X kann dabei ganz oder gebrochen, positiv oder negativ sein. Für Vorzeichen des Exponenten und auch der Mantisse, soweit gewünscht, sind also definierte Stellen im Datenwort, meist vor dem betreffenden Zahlwort vorgesehen.

Der Aufwand für die einzelnen arithmetischen Operationen (Addition, Subtraktion, Multiplikation, Division) ist unterschiedlich. In Festkomma-Darstellung sind manche Operationen, z.B. mit kurzen Zahlworten, leichter realisierbar. Beispielsweise müssen für die Addition von zwei Zahlen in Gleitkomma-Darstellung beide Summanden den gleichen Exponenten E aufweisen. Aus dem Vergleich der Exponenten folgt die Anzahl der Stellen, um die eine Mantisse zu verschieben ist. Das Ergebnis ist gegebenenfalls zu normalisieren, d.h. die Mantisse ist so zu verschieben, dass das MSB an der ersten Stelle steht, und der Exponent muss entsprechend korrigiert werden. Ein derartiges Schieben einer Mantisse ist also vor der eigentlichen arithmetischen Operation und beim Normalisieren oder beim Überlauf des Ergebnisses erforderlich. Der Hauptanteil der Ausführungszeit vergeht beim Vergleichen der Exponenten, beim Generieren logischer Entscheidungen und beim Schieben.

Für die Exponentenauswertung und das Generieren logischer Entscheidungen ist bei den Ausführungsformen der Erfindung die Steuereinrichtung zuständig, die diese Schritte in sehr kurzer Durchlaufzeit ermöglicht. Hierbei ist der Decoder von wesentlicher Bedeutung, dessen Ausgangssignale die dem Schiebewerk zuzuführenden Steuersignale darstellen. Er hat z.B. bei 4-Bit-Zahlworten für Exponenten der Basis 2 aus den $2^4 = 16$ Möglichkeiten nur die dem Wert des Exponenten entsprechende Stelle am zugeordneten Ausgang anzugeben. Diese Ausgänge des Decoders sind jeweils mit einer Zeile des Schiebewerkfeldes hinsichtlich der Steuersignale fest verbunden. Damit ist gewährleistet, dass immer nur die eine betreffende Zeile ausgewählt wird und gelesen werden kann.

Derartige Schiebevorgänge sind nicht nur bei Rechnungen in Gleitkomma-Darstellung erforderlich. Wie bereits oben schon erwähnt, können auch Multiplikationen/Divisionen in Festkomma-Darstellung mit Potenzen von 2 auf diese Weise durchgeführt werden. Von besonderer Bedeutung sind ausserdem Festkomma-/Gleitkomma-Umwandlungen, da zu verarbeitende Daten häufig in Festkomma-Darstellung vorliegen. Ebenfalls sind Gleitkomma-/Festkomma-Umwandlungen mittels Schiebeoperationen z.B. dann auszuführen, wenn Daten (nach einer arithmetischen Operation in Gleitkomma-Darstellung) über einen Digital/Analog-Wandler ausgegeben werden sollen.

Zur Spiegelung, die bei der erfindungsgemässen Lösung immer als Option erfolgt und von der bei Bedarf Gebrauch gemacht wird, dienen die Ein- und Ausgabeeinheiten aus jeweils zwei Sätzen zu je n Tristate-Elementen. Das bedeutet, ein Zahlwort mit z.B. linksbündigem MSB wird sowohl in dieser Darstellung als auch gespiegelt, d.h. mit rechtsbündigem MSB von der Eingabeeinheit aufgenommen. Führt das Schiebewerkfeld aufgrund der Anordnung der Tristate-Elemente in der dreieckförmigen Matrix z.B. nur Linksverschiebungen durch, wird ihm aber das zu verschiebende Zahlwort statt mit linksbündigem MSB nun mit rechtsbündigem MSB eingespeist, kommt das Linksverschieben des gespiegelten Zahlwortes und ein abermaliges Spiegeln, nunmehr des geschobenen Zahlwortes in der Ausgabeeinheit, einem Rechtsschieben gleich. Für Verschiebungen in eine der beiden Richtungen ist infolge dieser Ein- und Ausgabeeinrichtungen also nicht nur ein einziges unidirektionales Schiebewerk, sondern auch nur eine einzige Konfiguration dafür erforderlich.

Bevorzugte Ausführungsformen der Erfindung sind bei den Ein- und Ausgabeeinheiten mit zusätzlichen Tristate-Elementen, die einer ein Vorzeichen (Plus/Minus) im Datenwort darstellenden Stelle zugeordnet und direkt miteinander verbunden sind, ausgerüstet. Hierbei handelt es sich um das Vorzeichen eines Zahlwortes in Festkomma-Darstellung oder eines Zahlwortes für die Mantisse bei Gleitkomma-Darstellung, das sich bei Schiebeoperationen nicht verändert und deshalb ausserhalb der Zeilen und Spalten des Schiebewerkfeldes vorbeigeführt werden kann. Bezüglich des Vorzeichens eines links oder rechts zu verschiebenden Zahlwortes ist die Richtung der Verschiebung ohne jede Bedeutung. Tristate-Elemente für Vorzeichendaten sind also nur in der Eingabe- bzw. Ausgabeeinheit erforderlich. Allerdings sind zum Auslesen des Vorzeichens zwei Tristate-Elemente vorzusehen, die signalmässig parallel geschaltet sind und deren Eingänge an den Signalausgang des Vorzeichen-Tristate-Elements der Eingabeeinrichtung führen, steuersignalmässig jedoch getrennt für «Links-» oder «Rechtsverschiebungen» mit den betreffenden Tristate-Elementen für die Zeichen der Zahlworte zusammengeschaltet sind.

Hinsichtlich des Aufbaus von Teilen der erfindungsgemässen Ausführungsformen als integrierte Schaltkreise ist es sehr günstig, wenn dort in einem Baustein die Tristate-Elemente für das Schiebewerkfeld und für die Ein- und Ausgabeeinheiten enthalten sind. Für 8-Bit-Datenworte würde ein solcher Baustein insgesamt 24 Anschlussfahnen für die Signalein- und ausgänge sowie für die Steuersignale benötigen, so dass sich hier – zuzüglich der Fahnen für die Versorgungsspannung – handelsübliche Grössen ergeben.

Sollen Datenworte, die länger als 8 Bit sind, verarbeitet werden, kann bei Einbeziehung des der Steuereinrichtung zugeordneten Decoders in die integrierte Schaltung, gemäss einer weiteren bevorzugten Ausführungsform der Erfindung, die Anzahl der Steuersignaleingänge reduziert werden. Ohne hier tiefer auf die technologischen Fragen bezüglich der Integrierbarkeit einzugehen, sei nur noch erwähnt, dass bei einer abwechselnden Benutzung der Anschlussfahnen für die Eingangs- und die Ausgangssignale eine weitere Steigerung möglich ist. Wichtig ist dagegen die Tatsache, dass bei Ausführungsformen der Erfindung – im Gegensatz beispielsweise zu Multiplexern, die beim bisher bekannten Stand der Technik für derartige Zwecke zum Einsatz kommen – der Aufwand für höhere Genauigkeit arithmetischer Rechenoperationen, d.h. für grössere Wortlängen für die zu verarbeitenden Zahlworte, nicht überproportional steigt und hinsichtlich der Verarbeitungszeit die Wortlänge überhaupt keinen Einfluss hat.

Die universelle Verwendbarkeit von Ausführungsformen der Erfindung gestattet bzw. erfordert spezielle Ausgestaltungen der Steuereinrichtungen für spezifische arithmetische Operationen. Hierfür sind bei der Vielzahl der Anwendung von Schiebeoperationen insbesondere die Möglichkeiten der Umwandlungen von Festkomma-Darstellung in Gleitkomma-Darstellung und umgekehrt für die Erfindung von erheblicher Bedeutung. Für die Festkomma-/Gleitkomma-Konversion kann die Steuereinrichtung vorzugsweise über einen PLA (programmable logic array) Bausteine verfügen, dessen Ausgänge den Quellsatz für den Decoder sowie die Stellen einer einen Exponenten darstellenden Binärzahl liefern. Damit ist es möglich, während eines einzigen Schrittes einerseits die Position des MSB in einem Zahlwort in Festkomma-Darstellung festzustellen, aus der die dazu gehörige Anzahl von Postionen folgt, um die die Binätzahl zu verschieben ist, sowie den Wert des Exponenten-Zahlwortes für die Gleitkomma-Darstellung anzugeben, als auch – während desselben Schrittes – die Verschiebung der Binärzahl durchzuführen, d.h. dem Schiebewerkfeld die um die betreffende Anzahl von Positionen verschobene Binärzahl zu entnehmen.

In ähnlicher Weise und ebenso überraschend einfach ist eine Gleitkomma-/Festkomma-Konversion durchführbar, wenn die Steuereinrichtung über einen Inverter für eine Binärzahl, die den Quellsatz für den Decoder als deren Komplement liefert, verfügt. Dabei wird vom umzuwandelnden, in Gleitkomma-Darstellung vorliegenden Datenwort ebenfalls während eines einzigen Schrittes einerseits der dem Exponenten entsprechende Teil des Datenwortes dem Inverter zugeführt, der als Quellsatz für den Decoder die Zeichen des Exponenten-Zahlwortes invertiert, während andererseits der der Mantisse entsprechende Teil des Datenwortes gespiegelt in das Schiebewerkfeld gelangt, aus dem entsprechend dem Quellsatz vom Inverter über den Decoder die betreffende Zeile ausgewählt wird, deren Ergebnis gespiegelt wird und so die Binärzahl in Festkomma-Darstellung angibt.

In der Zeichnung sind Ausführungsformen der Erfindung schematisch dargestellt. Dabei zeigen:

Fig. 1: ein aus Tristate-Elementen aufgebautes Schiebewerkfeld für ein 8-Bit-Datenwort;

Fig. 2: eine Tabelle für die Zustandsbeschreibung des Schiebewerkfeldes gem. Fig. 1;

Fig. 3: ein aus Tristate-Elementen aufgebautes Schiebewerkfeld entsprechend Fig. 1, jedoch für ein n-Bit-Datenwort;

Fig. 4: eine Rechenwerkeinheit, bestehend aus einem Schiebewerkfeld und aus Eingabe- und Ausgabeeinrichtungen, die mit Tristate-Elementen aufgebaut sind;

Fig. 5: ein Blockschaltbild für einen Festkomma-/Gleitkomma-Umsetzer und

Fig. 6: ein Blockschaltbild für einen Gleitkomma-/Festkomma-Umsetzer.

Das in Fig. 1 gezeigte Schiebewerkfeld ist für ein 8-Bit-Datenwort ausgelegt. Dabei sind die Dateneingänge D0, D1..., D6 für sieben Stellen einer Binärzahl und die Stelle D7 für deren Vorzeichen vorgesehen. Eingangsdaten von D0 gelangen an je ein Tristate-Element in jeder Zeile und jeder Spalte des Schiebewerkfeldes 1, wobei von oben nach unten, zeilenweise fortschreitend, die Stelle von D0 jeweils um eine Position nach links gerückt oder verschoben wird. Entsprechend gelangen Eingangsdaten von D1 bis in die vorletzte Zeile des Schiebewerkfeldes 1 usw. bis zur Stelle D6, für die sich nur ein einziges Tristate-Element in der obersten Zeile und der linken Spalte befindet. Die Datenausgänge Y in der Ausgabeeinheit, einer weiteren Zeile mit acht Tristate-Elementen ausserhalb des eigentlichen Schiebewerkfeldes 1, fassen die Signalausgänge der Tristate-Elemente des Schiebewerkfeldes 1 spaltenweise zusammen, wobei für den Datenausgang Y7, das Vorzeichen, eine einfache Verbindung mit dem Tristate-Element für D7 am Dateneingang besteht. Die Steuersignaleingänge S0..., S6 für die Tristate-Elemente des Schiebewerkfeldes 1 sind zeilenweise zusammengefasst, so dass mit den Steuersignalen diejenige Zeile ausgewählt werden kann, aus der die Eingangsdaten um die betreffende Anzahl von Positionen nach links verschoben ausgelesen werden können. Dazu wird die Ausgabezeile mit dem Steuersignal $\overline{OC}$ geöffnet.

Die Tristate-Elemente lassen im angesteuerten Zustand das am Eingang liegende Signal, eine Eins oder eine Null, zum Ausgang durch und zeigen am Ausgang im nichtangesteuerten Zustand einen sehr hohen Widerstand, der eine Entkopplung bewirkt. Derartige Schaltungen mit sogenanntem Tristate-Ausgang sind bei vielen elektronischen Komponenten als solche bekannt, finden aber bei den Ausführungsformen der Erfindung, vorzugsweise als invertierende Tristate-Elemente, ihren Einsatz als elektronische Schalter oder elektronische Koppelpunkte in einem Koppelfeld.

Die in Fig. 2 angegebene Tabelle lässt die Funktionsweise des Schiebewerkfeldes 1 gem. Fig. 1 erkennen. Wird keine Zeile des Schiebewerkfeldes 1 angesteuert, d.h. $(\overline{S6}...,\overline{S0}) = X$, und wird die Ausgabezeile auch nicht geöffnet, d.h. $\overline{OC} = 1$, erscheinen an allen Datenausgängen, $(Y7...,Y0) = Z$ keine Signale, sondern die sehr hohen Widerstände. Die folgenden Zeilen der Tabelle geben an, welche Eingangsdaten D0...,D7 an den Ausgängen Y0...,Y7 erscheinen, wenn eine der Zeilen ausgewählt und die Ausgabezeile geöffnet ist ($\overline{Si} = 0$, $\overline{OC} = 0$), bzw. in der letzten Zeile der Tabelle, wenn keine Zeile des Schiebewerkfeldes ausgewählt ist ($\overline{S0}..., S6) = 1$.

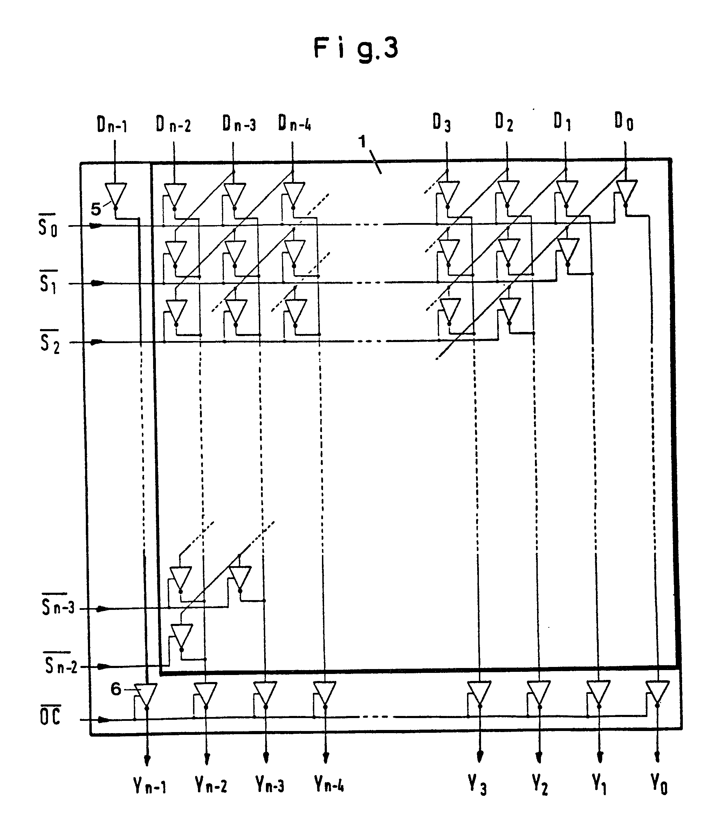

Das in Fig. 3 dargestellte Schiebewerk unterscheidet sich von dem gemäss Fig. 1 nur durch die Grösse. Es ist zu erkennen, dass der prinzipielle Aufbau derselbe ist und durch einfache Erweiterung der Zeilen und Spalten des Feldes 1 Schiebeoperatuinen mit Binärzahlen grösserer Stellenzahl durchzuführen sind. Für n-stellige Binärzahlen enthält das Schiebewerkfeld 1 in n Zeilen und n Spalten – die Tristate-Elemente 5, 6 für Vorzeichen und in der Ausgabezeile nicht mit eingeschlossen – eine Gesamtzahl von $n(n+1)/2$ derartiger Elemente.

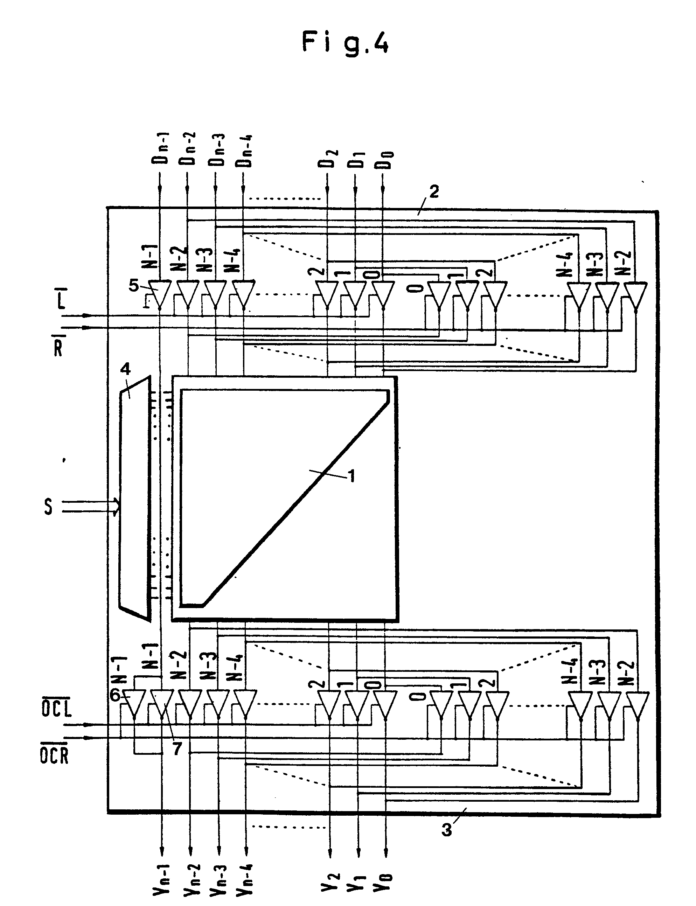

Eine Rechenwerkeinheit, wie sie die Fig. 4 zeigt, besteht aus dem – hier nun nicht mehr detailliert dargestellten – Schiebewerkfeld 1 und aus Eingabe- und Ausgabeeinrichtungen 2, 3, die aus Tristate-Elementen aufgebaut sind. Hiermit lassen sich sowohl Links- als auch Rechtsverschiebungen durchführen, obwohl das dreieckförmige Halbmatrix-Schiebewerkfeld 1 nur für eine Richtung ausgebildet ist. Die Eingabeeinrichtung 2 besteht aus zwei Sätzen von Tristate-Elementen, bei denen die Dateneingänge von jeweils einem Tristate-Element der beiden Sätze parallel geschaltet sind. Die einzelnen Stellen einer eingegebenen Binärzahl gelangen also völlig gleichartig zu den beiden Sätzen. Die Datenausgänge von jeweils einem Tristate-Element der beiden Sätze sind jedoch bezüglich der Positionen entgegengesetzt zusammengefasst:

Position N-2 des linken Satzes mit Position 0 des rechten Satzes,

Position N-3 des linken Satzes mit Position 1 des rechten Satzes,

Position N-4 des linken Satzes mit Position 2 des rechten Satzes,

und so weiter bis

Position 0 des linken Satzes mit Position N-2 des rechten Satzes.

Die Position N-1 ist für das Vorzeichen der Binärzahl bestimmt und nimmt an der Spiegelung nicht teil. Mit den Steuersignalen L bzw. $\overline{R}$ für die Eingabeeinrichtung 2 lässt sich bestimmen, ob die Binärzahl in ihrer Originalstellung oder gespiegelt dem Schiebewerkfeld 1 zugeführt werden soll. Die Ausgabeeinheit 3 ist in ihrem Aufbau identisch mit der Eingabeeinheit 2, bis auf einen geringfügigen Unterschied bei der Position N-1 für das Vorzeichen, der sogleich unten noch erläutert wird. Dadurch steht die verschobene Binärzahl an den Datenausgängen YO...,Y(N-2) – bezogen auf den Ausgang des Schiebewerkfeldes 1 – ebenfalls in Originalstellung oder gespiegelt zur Verfügung. Mit anderen Worten bedeutet das: vom Schiebewerkfeld 1 werden aufgrund seines Aufbaus jeweils linksbündige Stellen ausgesondert und dafür von rechts Ziffern nachgezogen. Wird aber eine Verschiebung gebraucht, bei der rechtsbündige Ziffern entfallen sollen, und dementsprechend von links Ziffern nachzuziehen sind, wird die betreffende Binärzahl in ihrer gespiegelten Darstellung verschoben und sodann wieder gespiegelt.

Das Vorzeichen der Binärzahl bleibt bei den beschriebenen Operationen erhalten. Es ist also an der Stelle Y(N-1) am Datenausgang genau so anzugeben, wie es am Dateneingang D(N-1) erscheint. Da für das Öffnen der Ausgabeeinheit 3 zwei Varianten vorhanden sind, muss auch für diese beiden Varianten je ein Tristate-Element 6,7 für das Vorzeichensignal vorgesehen werden.

Diese sind signalmässig am Eingang und am Ausgang parallel geschaltet und unmittelbar mit dem Datenausgang des Tristate-Elements 5 der Eingabeeinheit 2 verbunden.

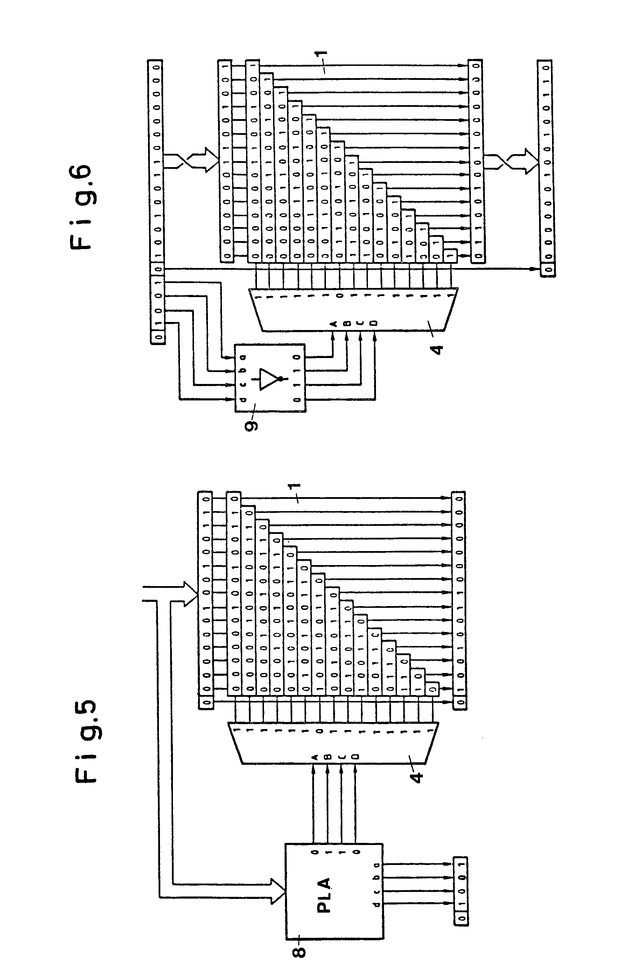

Die Fig. 5 zeigt einen Festkomma-/Gleitkomma-Umsetzer, im Prinzip als Blockschaltbild, jedoch gleichzeitig mit einem darin angegebenen Beispiel für eine derartige Operation. Über den Datenweg gelangt an diese Rechenwerkeinheit ein 16-Bit-Datenwort, dessen linksbündige Position ein Zeichen O für das – positive – Vorzeichen der Dezimalzahl 294 in Festkomma-Darstellung aufweist. Die der Dualzahl zugehörigen Positionen lauten:

000000100100110. (Das ist: $2^8 + 2^5 + 2^2 + 2^1$ $= 294 = 2^9(1/2 + 1/16 + 1/128 + 1/256)$.)

Die Dualzahl gelangt in das Schiebewerkfeld 1, wo die Positionen von Zeile zu Zeile fortschreitend jeweils um eine Stelle nach links gerückt werden. Der PLA (programmable logic array)-Baustein 8, dem das Datenwort gleichzeitig zugeführt wird, stellt fest, dass vor dem MSB (most significant bit) des Zahlwortes sechs Nullen stehen. Er folgert daraus einerseits, dass die in Gleitkommadarstellung anzugebende Zahl kleiner als $2^9$ sein muss, denn bei insgesamt 15 Stellen minus 6 Null-Stellen von links folgt für den Exponenten der Zahl zwei: $15-6=9$; $(2^9=512)$. Andererseits gibt er die Zahl 6 als Quellsatz in der Form 0110 an den Decoder 1, der aus diesem Quellsatz mit dem «1 aus 16» erzeugten Code im Schiebewerkfeld 1 diejenige Zeile auswählt, bei der die ersten sechs Stellen von links ausgesondert sind. Das ist die neunte Zeile von unten. Als Ergebnis erscheinen somit:

Mantisse: Vorzeichen: 0 ( = positiv)
           Zahlwort: 100100110000000
Exponent: Vorzeichen: 0 ( = positiv)
           Zahlwort: 1001

Wie sich leicht nachrechnen lässt, ist

$294 = 2^9 \cdot 0{,}57421875$

wobei sich die Mantisse zusammensetzt aus

$1/2 = 0{,}5$
$1/16 = 0{,}0625$
$1/128 = 0{,}0078125$
$1/256 = 0{,}00390625$

        $0{,}57421875$

Die Ausführungszeit für diese Festkomma-/Gleitkomma-Konversion beträgt ca. 40 ns, wobei ca. 25 ns auf die Operation im PLA-Baustein entfallen.

Die Fig. 6 zeigt, ähnlich wie bei Fig. 5, eine Rechenwerkeinheit, hier aber für eine Gleitkomma-/Festkomma-Umsetzung. Das Schiebewerkfeld 1 und der Decoder 4 sind identisch mit denen gemäss Fig. 5. Für das in Fig. 6 gewählte Beispiel sind der Einfachheit halber dieselben Zahlen wie beim Beispiel von Fig. 5 eingesetzt. Die in Gleitkomma-Darstellung vorliegende Zahl wird durch das 21-Bit-Datenwort dargestellt, von dem die linksbündige Stelle das Zeichen für das Vorzeichen des Exponenten, die Stellen 2 bis 5 das Zahlwort für den Exponenten, die Stelle 6 das Zeichen für das Vorzeichen der Mantisse und die verbleibenden Stellen das Zahlwort für die Mantisse enthalten.

Die Vorzeichen des Exponenten und der Mantisse bleiben bei der Gleitkomma-/Festkomma-Konversion unverändert. Das Zahlwort für die Mantisse weist linksbündig ihre MSB-Stelle auf, kann also nicht ohne weiteres für eine Schiebeoperation dem Schiebewerkfeld 1 zugeführt werden, das aufgrund seiner Konfiguration linksbündige Stellen aussondert und von rechts Ziffern nachzieht. Das Zahlwort wird deshalb dem Schiebewerkfeld 1 in gespiegelter Darstellung zugeführt, was der verdrehte Pfeil bei der Eingabeeinheit symbolisiert. Dieses gespiegelte Zahlwort wird nun im Schiebewerkfeld 1 in den einzelnen Zeilen um jeweils eine – weitere – Position versetzt in der bereits erläuterten Weise zur Verfügung gehalten. Die Auswahl der betreffenden Zeile des Schiebewerkfeldes erfolgt vom Decoder 4, ebenfalls in der bereits im Zusammenhang mit Fig. 5 erläuterten Weise.

Hierzu ist die Formulierung des Quellsatzes für den Decoder 4 aus dem Zahlwort des Exponenten erforderlich, die bei der hier erläuterten Ausführungsform auf überraschend einfache Weise bewerkstelligt wird. Um denselben Decoder 4 verwenden zu können, der auch bei den anderen Operationen eingesetzt wird, sind die Zeichen des Exponenten-Zahlwortes nur zu invertieren und bilden so den Quellsatz für den Decoder 4.

Beim behandelten Beispiel wird dadurch vom Decoder 4 die neunte Zeile von unten im Schiebewerkfeld 1 ausgewählt. Die aus dieser Zeile entnommene Dualzahl wird gespiegelt, was wiederum durch den verdrehten Pfeil bei der Ausgabeeinheit symbolisiert ist. Das Ergebnis davon ist die Festkomma-Darstellung des Zahlwortes.

Die Ausführungszeit für diese Gleitkomma-/Festkomma-Konversion erfolgt, auch hier in einem Schritt, in ca. 30 ns.

Über die hier beschriebene Erfindung wurde auch im Rahmen der «IEEE 1980 International Conference on Circuits and Computers (ICCC) für Large Scale Systems» vom 1. bis 3. Oktober 1980 berichtet (Architecture for VLSI-Circuits in Digital Signal Processing; Autoren: Block, R., Böttcher, K., Lacroix, A. und Talmi, M.).

**Patentansprüche**

1. Rechenwerkeinheit mit einer parallelen bidirektionalen Schiebeeinrichtung für das Verschieben einer n-stelligen binären Zahl nach links oder rechts, wobei die Schiebeeinrichtung ein unidirektionales Schiebewerk enthält, dem die n-stellige Zahl in ihrer originalen oder dazu gespiegelten Darstellung zugeführt wird, einer Steuereinrichtung und einer Ein-/Ausgabe-Einrichtung, dadurch gekennzeichnet, dass
– das unidirektionale Schiebewerk als ein aus Tristate-Elementen aufgebautes, dreieckförmiges Halbmatrix-Schiebewerkfeld (1) ausgebildet ist und in n Zeilen und n Spalten eine Anzahl von n(n + 1)/2 derartige Elemente enthält, mit denen mittels eines bestimmten von insgesamt n Steuersignalen (S̄) die den einzelnen Stellen der binären Zahl zugeordneten n Eingänge (D) des Schiebewerkfeldes (1) um eine bestimmte Anzahl von Positionen verschoben auf die n Ausgänge (Y) des Schiebewerkfeldes (1) durchschaltbar sind,
– als Ein-/Ausgabe-Einrichtung aus Tristate-Elementen aufgebaute Einheiten (2, 3) vorgesehen sind, die für eine n-stellige binäre Zahl jeweils aus zwei Sätzen zu je n Tristate-Elementen bestehen und die jeweilige n-stellige binäre Zahl in zueinander spiegelbildlichen Darstellungen aufnehmen,
– für solche Stellen der binären Zahl, die bei einer Verschiebung im Schiebewerkfeld (1) entfallen, Tristate-Elemente der Ausgabe-Einheit (3) auch als Schaltelemente zur Erzeugung von definierten Ausgangssignalen an den entfallenden Stellen dienen, und
– die Steuereinrichtung einen Decoder (4) enthält, dessen Ausgänge direkt die Steuersignale (S̄) für das Schiebewerkfeld (1) liefern.

2. Rechenwerkeinheit nach Anspruch 1, dadurch gekennzeichnet, dass die Ein-/Ausgabeeinheiten (2, 3) mit zusätzlichen Tristate-Elementen (5, 6, 7) versehen sind, die einer ein Vorzeichen (Plus/Minus) darstellenden Stelle zugeordnet und direkt miteinander verbunden sind.

3. Rechenwerkeinheit nach Anspruch 1 oder 2, dadurch gekennzeichnet, dass die Tristate-Elemente für das Schiebewerkfeld (1) und für die Ein-/Ausgabeeinheiten (2, 3) in einer integrierten Schaltung enthalten sind.

4. Rechenwerkeinheit nach Anspruch 3, dadurch gekennzeichnet, dass auch der der Steuereinrichtung zugeordnete Decoder (4) in der integrierten Schaltung enthalten ist.

5. Rechenwerkeinheit nach einem der Ansprüche 1 bis 4, dadurch gekennzeichnet, dass die Steuereinrichtung für Gleitkomma-Operationen mit einem PLA (Programmable Logic Array)-Baustein (8) versehen ist, dessen Ausgänge den Quellsatz für den Decoder (4) sowie die Stellen einer einen Exponenten darstellenden Binärzahl liefern.

6. Rechenwerkeinheit nach einem der Ansprüche 1 bis 5, dadurch gekennzeichnet, dass die Steuereinrichtung für Gleitkomma-Operationen mit einem Inverter (9) versehen ist, der den Quellsatz für den Decoder (4) als Komplement der dem Inverter (9) zugeführten Binärzahl liefert.

**Revendications**

1. Unité de calcul munie d'un dispositif de décalage bidirectionnel parallèle pour le décalage vers la gauche ou vers la droite d'un nombre binaire à n positions, ce dispositif de décalage renfermant une unité de décalage unidirectionnelle à laquelle le nombre à n positions est délivré sous sa représentation originelle ou miroir (inversée spéculairement), d'un dispositif de commande et d'un dispositif d'entrée et de sortie, caractérisé par le fait que
– l'unité de décalage unidirectionnelle est réalisée sous forme d'une zone (1) d'unité de décalage de configuration triangulaire, à structure de demi-matrice et constituée par des éléments à trois états, et renferme en n lignes et n colonnes un nombre n(n + 1)/2 de tels éléments avec lesquels, au moyen d'un nombre total déterminé de n signaux de commande ($\bar{S}$), les n entrées (D) de la zone (1) de l'unité de décalage associées aux positions individuelles du nombre binaire peuvent être transmises, en étant décalées d'un nombre déterminé de positions, vers les n sorties (Y) de la zone (1) de l'unité de décalage,

– il est prévu, en tant que dispositif d'entrée et de sortie, des unités (2, 3) constituées par des éléments à trois états qui, pour un nombre binaire à n positions, se composent à chaque fois de deux jeux comptant chacun n éléments à trois états et reçoivent le nombre binaire considéré à n positions dans des représentations mutuellement inversées spéculairement,

– pour les positions du nombre binaire qui sont supprimées lors d'un décalage dans la zone (1) de l'unité de décalage, des éléments à trois états de l'unité de sortie (3) servent également d'éléments de commutation pour engendrer des signaux de sortie déterminés dans les positions supprimées et

– le dispositif de commande contient un décodeur (4) dont les sorties délivrent directement les signaux de commande ($\bar{S}$) pour la zone (1) d'unité de décalage.

2. Unité de calcul selon la revendication 1, caractérisée par le fait que les unités (2, 3) d'entrée et de sortie sont munis d'éléments supplémentaires (5, 6, 7) à trois états qui sont associés à une position représentant un signe (plus/moins) et sont directement raccordés les uns aux autres.

3. Unité de calcul selon la revendication 1 ou 2, caractérisée par le fait que les éléments à trois états pour la zone (1) d'unité de décalage et pour les unités (2, 3) d'entrée et de sortie sont incorporés dans un circuit intégré.

4. Unité de calcul selon la revendication 3, caractérisée par le fait que le décodeur (4) associé au dispositif de commande est, lui aussi, incorporé dans le circuit intégré.

5. Unité de calcul selon l'une des revendications 1 à 4, caractérisée par le fait que le dispositif de commande pur des opérations à virgule flottante est doté d'un élément fonctionnel (8) du type PLA (réseau logique programmable), dont les sorties délivrent la séquence source pour le décodeur (4) ainsi que les positions d'un nombre binaire représentant un exposant.

6. Unité de calcul selon l'une des revendications 1 à 5, caractérisée par le fait que le dispositif de commande pour des opérations à virgule flottante est doté d'un inverseur (9) qui fournit la séquence source pour le décodeur (4) sous forme de complément du nombre binaire délivré audit inverseur (9).

## Claims

1. Arithmetic unit having a parallel bidirectional shift device for shifting an n-digit binary number to the left or to the right, the shift device including a unidirectional shift unit to which the n-digit (binary) number is fed in its original or mirrored form, a control device and an input/output device, characterised in that:

the unidirectional shift unit is composed of tristate elements forming a triangular, semimatrix shift unit field (1) and comprises, in n rows and n columns, a number of n(n + 1)/2 such elements with which, by means of a specific one of n control signals ($\bar{S}$) in total, n inputs (D) of the shift unit field (1), which inputs are associated with individual digits of the binary number, can be shifted by a specific number of digits and switched through to n outputs (Y) of the shift unit field (1);

the input/output device comprises units (2, 3) which, for an n-digit binary number, each consist of two sets of n tristate elements and which receive the n-digit binary number respectively in mutually mirrored form;

switching elements, and tristate elements of the output unit (3), serve to produce defined output signals for those digits of the binary number which are lost as a result of a shift in the shift unit field (1); and

the control device comprises a decoder (4) of which the outputs directly supply the control signals ($\bar{S}$) for the shift unit field (1).

2. Arithmetic unit according to claim 1, characterised in that the input/output units (2, 3) are provided with additional tristate elements (5, 6, 7) which are associated with a digit representing an operational sign (plus/minus) and are directly interconnected.

3. Arithmetic unit according to claim 1 or 2, characterised in that the tristate elements forming the shift unit field (1) and the input/output units (2, 3) are included in an integrated circuit.

4. Arithmetic unit according to claim 3, characterised in that the decoder (4) which is associated with the control device is also included in the integrated circuit.

5. Arithmetic unit according to any of claims 1 to 4, characterised in that the control device is provided with a PLA (Programmable Logic Array) module (8) for floating-point operations, of which the outputs supply a source set for the decoder (4) and also the digits, of a binary number, representing an exponent.

6. Arithmetic unit according to any one of claims 1 to 5, characterised in that the control device is provided with an inverter (9) for floating-point operations, which supplies the source set for the decoder (4) as a complement of the binary number fed to the inverter (9).

# Fig.1

# Fig.2

| $\overline{S6}$ | $\overline{S5}$ | $\overline{S4}$ | $\overline{S3}$ | $\overline{S2}$ | $\overline{S1}$ | $\overline{S0}$ | $\overline{OC}$ | Y7 | Y6 | Y5 | Y4 | Y3 | Y2 | Y1 | Y0 |
|---|---|---|---|---|---|---|---|---|---|---|---|---|---|---|---|
| X | X | X | X | X | X | X | 1 | Z | Z | Z | Z | Z | Z | Z | Z |
| 1 | 1 | 1 | 1 | 1 | 1 | 0 | 0 | D7 | D6 | D5 | D4 | D3 | D2 | D1 | D0 |
| 1 | 1 | 1 | 1 | 1 | 0 | 1 | 0 | D7 | D5 | D4 | D3 | D2 | D1 | D0 | 0 |
| 1 | 1 | 1 | 1 | 0 | 1 | 1 | 0 | D7 | D4 | D3 | D2 | D1 | D0 | 0 | 0 |
| 1 | 1 | 1 | 0 | 1 | 1 | 1 | 0 | D7 | D3 | D2 | D1 | D0 | 0 | 0 | 0 |
| 1 | 1 | 0 | 1 | 1 | 1 | 1 | 0 | D7 | D2 | D1 | D0 | 0 | 0 | 0 | 0 |
| 1 | 0 | 1 | 1 | 1 | 1 | 1 | 0 | D7 | D1 | D0 | 0 | 0 | 0 | 0 | 0 |
| 0 | 1 | 1 | 1 | 1 | 1 | 1 | 0 | D7 | D0 | 0 | 0 | 0 | 0 | 0 | 0 |
| 1 | 1 | 1 | 1 | 1 | 1 | 1 | 0 | D7 | 0 | 0 | 0 | 0 | 0 | 0 | 0 |

# Fig.3

Fig.4

Fig.5

Fig.6